# EUROPEAN PATENT APPLICATION

(11) **EP 4 541 845 A1**
(43) Date of publication of application: **23.04.2025**
(21) Application number: 24150451.3
(22) Date of filing: 04.01.2024
(51) Int. Cl.: C08K 3/22, C08K 5/5399

(54) **POLYLACTIC ACID COMPOSITIONS AND METHODS OF PREPARING THE SAME**

(30) Priority: 17.10.2023 CN 202311342354
(71) Applicant: Baotou Research Institute of Rare Earths, Baotou, Inner Mongolia 014030 (CN)
(72) Inventor: HAN, Dequan, Baotou, 014030 (CN); CAO, Hongzhang, Baotou, 014030 (CN); YU, Xiaoli, Baotou, Baotou (CN); CAO, Luya, Baotou, 014030 (CN); TIAN, Huhu, Baotou, 014030 (CN); LI, Zhiqiang, Baotou, 014030 (CN); WANG, Hui, Baotou, 014030 (CN); LU, Tingting, Baotou, 014030 (CN); ZHOU, Xiaodong, Baotou, 014030 (CN); GUO, Liying, Baotou, 014030 (CN); FAN, Baoxue, Baotou, 014030 (CN); SONG, Jing, Baotou, 014030 (CN)
(74) Representative: Gong, Jinping

(57) **Abstract**

The present disclosure provides a polylactic acid composition and a method of preparing the same. The polylactic acid composition comprises a polymeric material and a reaction product obtained by reacting a compound represented by formula (A) with a compound represented by formula (B), the polymeric material comprising polylactic acid, the compound represented by formula (A) being a trimeric phosphazene-based substance, and the compound represented by formula (B) being diamine. The polylactic acid composition is favorable in both flame retardancy and toughness.

## Description

### TECHNICAL FIELD OF THE DISCLOSURE

The present disclosure relates to a polylactic acid composition and a method of preparing the same.

### BACKGROUND OF THE DISCLOSURE

Polymers are widely used in automobiles, buildings, household appliances, agriculture, and other fields. Most polymers are not good in flame retardancy, so in their practical application, flame retardants must be added to them. Single-component composite flame retardants are not efficient in flame retardancy and need to be added in a large amount. Multi-component composite flame retardants are not compatible with polymers and affect the mechanical properties of polymers.

CN114805816A discloses a method of preparing a flame retardant, which comprises dissolving poly(methyl hydrogen siloxane) in a solvent, adding thereto a straight-chain alkenoxy pentachlorotriphosphazene and a catalyst, stirring the mixture for 10-40 hours, removing the solvent, and drying the solid to obtain a polymeric flame retardant.

CN111875648A discloses a method of preparing a bio-based macromolecular flame retardant, which comprises adding 10-30 g of tannic acid and 5-20 mL of triethylamine to 50-200 ml of acetonitrile to obtain a mixture, heating the mixture to 30-45 °C, adding 10-40 ml of hexachlorotriphosphazene to the mixture, and then heating the mixture at 50 °C for 1-3 hr to obtain a mixed solution containing tannin phosphazene chloride; adding 10-30 g of m-phenylenediamine to the mixed solution, heating the mixture to 60-80 °C, letting it react at 60-80 °C for 2-4 hr, filtering the mixture, cleaning the solid with acetonitrile to remove the salt of triethylamine and unreacted raw materials, and drying the solid to obtain a bio-based macromolecular flame retardant.

The flame retardancy and toughness of the flame retardants described above, however, need to be further improved.

### SUMMARY OF THE DISCLOSURE

In view of the above, one objective of the present disclosure is to provide a polylactic acid composition which is favorable in both flame retardancy and toughness. Another objective of the present disclosure is to provide a method of preparing a polylactic acid composition.

The above objectives are accomplished by technical solutions described below.

One aspect of the present disclosure is to provide a polylactic acid composition, comprising a polymeric material and a reaction product obtained by reacting a compound represented by formula (A) with a compound represented by formula (B), wherein the polymeric material comprises polylactic acid, 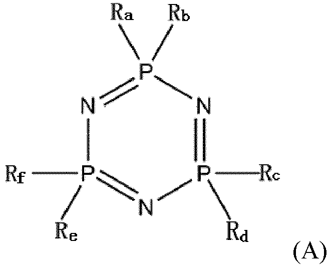 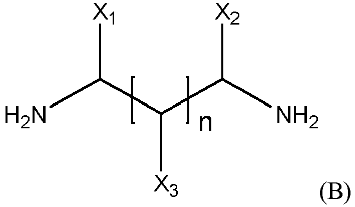 where Rₐ to Rf are each independently selected from the group consisting of H, a C1 to C10 alkyl group, and a halogen atom; X₁ to X₃ are each independently selected from the group consisting of H and a C1 to C3 alkyl group, and n is an integer of 0 to 10.

In the polylactic acid composition according to the present disclosure, the molar ratio of the compound represented by formula (A) to the compound represented by formula (B) is preferably 6: (25-80).

In the polylactic acid composition according to the present disclosure, it is preferable that n is an integer of 0 to 7, and that X₁ to X₃ are each independently selected from H.

The polylactic acid composition according to the present disclosure preferably comprises 1-30 parts by weight of the reaction product based on 100 parts by weight of the polymeric material.

In the polylactic acid composition according to the present disclosure, the polymeric material comprises the polylactic acid preferably in an amount greater than or equal to 40 wt%.

In the polylactic acid composition according to the present disclosure, the polymeric material preferably further comprises one or more selected from the group consisting of polyethylene, polypropylene, polyvinyl chloride, a polyester-based substance, and an epoxy resin.

The polylactic acid composition according to the present disclosure preferably further comprises a rare earth oxide in an amount of 0.3-2 parts by weight based on 100 parts by weight of the polymeric material,
wherein the rare earth oxide is one or more selected from the group consisting of lanthanum oxide, cerium oxide, and yttrium oxide.

Another aspect of the present disclosure is to provide a method of preparing the polylactic acid composition described above, comprising:
a step of melting a raw material comprising a polymeric material and a reaction product to obtain a polylactic acid composition.

The method according to the present disclosure preferably further comprises:
a step of reacting a compound represented by formula (A) with a compound represented by formula (B) in the presence of a solvent and an acid-binding agent to obtain the reaction product,
wherein the solvent is one or more selected from the group consisting of chloromethane, dichloromethane, trichloromethane, tetrachloromethane, chloroethane, dichloroethane, trichloroethane, tetrachloroethane, chloropropane, dichloropropane, trichloropropane, tetrachloropropane, ethyl acetate, dimethyl sulfoxide and acetone;
the acid-binding agent is one or more selected from the group consisting of a tertiary amine-based compound, pyridine, and tetraethylene pentamine;
the molar ratio of the compound represented by formula (A) to the acid-binding agent is 6: (30-90); and
the step of reacting proceeds at a temperature of -10-10 °C for a period of 24-80 hr.

In the method according to the present disclosure, the step of melting is preferably carried out at a temperature of 165-195 °C under stirring at a screw speed of 30-120 rpm.

The polylactic acid composition according to the present disclosure has both favorable flame retardancy and high toughness.

### DETAIL DESCRIPTION OF THE DISCLOSURE

The following is a further description of the present disclosure by means of embodiments, but the present disclosure is not limited to the embodiments.

### <Polylactic Acid Composition>

The polylactic acid composition of the present disclosure comprises a polymeric material and a reaction product obtained by reacting a compound represented by formula (A) with a compound represented by formula (B). In some embodiments, the polylactic acid composition can further comprise one or more selected from the group consisting of a rare earth oxide and an additive.

In the present disclosure, the polymeric material comprises polylactic acid. The content of polylactic acid in the polymeric material is greater than or equal to 40 wt%, preferably greater than or equal to 50 wt%, and more preferably greater than or equal to 70 wt%. The content of polylactic acid in the polymeric material is less than or equal to 80 wt%, preferably less than or equal to 90 wt%, and more preferably less than or equal to 100 wt%. In some embodiments, the polymeric material is polylactic acid. In other embodiments, the polymeric material further comprises one or more of polyethylene, polypropylene, polyvinyl chloride, a polyester-based substance, and/or an epoxy resin. The polyester-based substance can be an aromatic polyester or a chain polyester. In some embodiments, the polyester-based substance is polycarbonate. In other embodiments, the polyester-based substance is obtained by copolymerizing an aromatic diacid, a chain diacid and a chain diol. In still other embodiments, the polyester-based substance can be obtained by copolymerizing a chain diacid, an aromatic diol and a chain diol. Examples of the polyester-based substance include, but are not limited to, poly(butylene adipate-co-terephthalate) and polybutylene succinate.

Formula (A) is as follows:

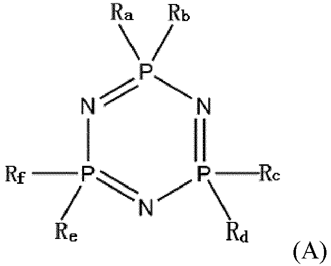

In formula (A), Rₐ to Rf are each independently selected from H, a C1 to C10 alkyl group, and a halogen atom. Preferably, Rₐ to R_{f} are each independently selected from H, a C1 to C6 alkyl group, and a halogen atom. More preferably, Rₐ to Rf are each independently selected from H, a C1 to C3 alkyl group, and a halogen atom.

In the present disclosure, the C1 to C10 alkyl group can be either a chain alkyl group or a cycloalkyl group. In some embodiments, the C1 to C10 alkyl group is a chain alkyl group. The chain alkyl group can be a straight-chain alkyl group or a branched-chain alkyl group. In some embodiments, the C1 to C10 alkyl group is a straight-chain alkyl group. Examples of the C1 to C10 alkyl group include, but are not limited to, methyl, ethyl, propyl, isopropyl, butyl, methylpropyl, amyl, methylbutyl, dimethylpropyl, ethylpropyl, hexyl, methylpentyl, dimethylbutyl, ethylbutyl, cyclopropyl, and cyclopentyl groups.

Examples of the halogen atom include, but are not limited to, fluorine, chlorine, bromine, and iodine atoms. Preferably, the halogen atom is a chlorine atom.

In some embodiments, at least three of Rₐ to R_{f} are halogen atoms. Preferably, at least four of Rₐ to Rf are halogen atoms. More preferably, at least five of Rₐ to Rf are halogen atoms.

In some embodiments, at least one of Rₐ and R_{b} is a halogen atom; at least one of R_{c} and R_{d} is a halogen atom; at least one of Rₑ and R_{f} is a halogen atom.

In some embodiments, all of Rₐ to R_{f} are halogen atoms.

Examples of the compound represented by formula (A) include, but are not limited to, phosphonitrilic chloride trimer, which is also known as hexachlorocyclotriphosphazene or hexachlorotriphosphazene.

Formula (B) is as follows: 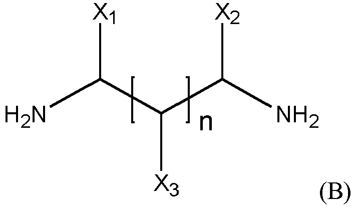 In formula (B), X₁ to X₃ are each independently selected from H and a C1 to C3 alkyl group, and n is an integer of 0 to 10.

X₁ to X₃ are each independently selected from H and a C1 to C3 alkyl group. In some embodiments, X₁ to X₃ are independently selected from H. The C1 to C3 alkyl group can be either a chain alkyl group or a cycloalkyl group. In some embodiments, the C1 to C3 alkyl group is a chain alkyl group. The chain alkyl group can be a straight-chain alkyl group or a branched-chain alkyl group. In some embodiments, the C1 to C3 alkyl group is a straight-chain alkyl group. Examples of the C1 to C3 alkyl group include, but are not limited to, methyl, ethyl, propyl, isopropyl, and cyclopropyl groups.

In formula (B), n is an integer of 0 to 10. In some embodiments, n is 0. In other embodiments, n is an integer of 1 to 7. In still other embodiments, n is an integer of 2 to 5.

Examples of the compound represented by formula (B) include, but are not limited to, ethylenediamine, propylenediamine, butanediamine, pentanediamine, and hexanediamine.

The molar ratio of the compound represented by formula (A) to the compound represented by formula (B) can be 6: (25-80), preferably 6: (30-70), and more preferably 6: (40-60).

The reaction product obtained by reacting the compound represented by formula (A) with the compound represented by formula (B) is 1-30 parts by weight, preferably 5-25 parts by weight, and more preferably 10-20 parts by weight, based on 100 parts by weight of the polymeric material.

In the present disclosure, the rare earth oxide can be one or more of lanthanum oxide, cerium oxide, and/or yttrium oxide. The mass ratio of the reaction product obtained by reacting the compound represented by the formula (A) and the compound represented by the formula (B) to the rare earth oxide can be (3-20): 1, preferably (5-15): 1, and more preferably (8-12): 1.

The rare earth oxide is 0.3-2 parts by weight, preferably 0.5-1.5 parts by weight, and more preferably 0.8-1.2 parts by weight, based on 100 parts by weight of the polymeric material.

In the present disclosure, the additive can be one or more of soybean oil, epoxy soybean oil, tributyl citrate, acetyl tributyl citrate, an antioxidant, and/or a plasticizer.

The additive can be 0.1-2 parts by weight, preferably 0.5-1.5 parts by weight, and more preferably 0.5-1 part by weight, based on 100 parts by weight of the polymeric material.

### <Method of Preparing Polylactic Acid Composition>

The method of preparing a polylactic acid composition comprises a step of melting a raw material comprising a polymeric material and a reaction product to obtain a polylactic acid composition. The raw material can further comprise a rare earth oxide and an additive. In some embodiments, the method further comprises a step of granulating the product of the step of melting.

The reaction product is obtained by reacting a compound represented by formula (A) with a compound represented by formula (B). The chemical structures of the compounds represented by formula (A) and formula (B) as well as their amounts are the same as described above and not repeated here. The respective ingredients in the raw material as well as their amounts are the same as described above and not repeated here.

The step of melting can be carried out at a temperature of 165-195 °C, and preferably 170-180 °C. The step of melting can be carried out for a period of 5-15 min, and preferably 7-10 min.

The step of melting is carried out under stirring by, for example, using a screw extruder. The screw speed can be 30-120 rpm, and preferably 50-100 rpm.

In some embodiments, the method further comprises a step of reacting a compound represented by formula (A) with a compound represented by formula (B).

The step of reacting a compound represented by formula (A) with a compound represented by formula (B) be carried out in the presence of a solvent. The solvent can be one or more of chloromethane, dichloromethane, trichloromethane, tetrachloromethane, chloroethane, dichloroethane, trichloroethane, tetrachloroethane, chloropropane, dichloropropane, trichloropropane, tetrachloropropane, ethyl acetate, dimethyl sulfoxide, and/or acetone. In some embodiments, the solvent is dichloromethane.

The step of reacting a compound represented by formula (A) with a compound represented by formula (B) can be carried out in the presence of an acid-binding agent. The acid-binding agent can be one or more of a tertiary amine-based compound, pyridine, and/or tetraethylene pentamine. The tertiary amine-based compound can be one or more of triethylamine and/or N,N-diisopropylethylamine.

The step of reacting a compound represented by formula (A) with a compounds represented by formula (B) can be carried out under the protection of an inert gas. Examples of the inert gas include, but are not limited to, nitrogen, helium, neon, and argon.

The step of reacting can proceed at a temperature of -10-10 °C, preferably -5-5 °C, and more preferably -2-2 °C.

The step of reacting can proceed for a period of 24-80 hr, preferably 30-60 hr, and more preferably 40-50 hr.

The molar ratio of the compound represented by formula (A) to the acid-binding agent is 6: (30-90), preferably 6: (40-80), and more preferably 6: (50-70).

The amount of the solvent is 100-600 mL, preferably 200-500 mL, and more preferably 300-400 mL, based on 0.06 mol of the compound represented by formula (A).

The step of reacting is specifically adding dropwise a second reactant containing a compound represented by formula (A) and a part of a solvent to a first reactant containing a compound represented by formula (B), an acid-binding agent, and the remaining part of the solvent. This step can be carried out under the protection of an inert gas. Examples of the inert gas include, but are not limited to, nitrogen, helium, neon, and argon.

The ratio of the volume of the solvent in the second reactant to the total volume of the solvent is 0.05-0.6: 1, and preferably 0.2-0.4: 1.

In some embodiments, the method further comprises centrifuging and filtering the substance obtained from the step of reacting to obtain a filter cake. The filter cake is dried in vacuum at a temperature of 30-70 °C, preferably 40-60 °C, for a period of 7-15 hr, preferably 9-12 hr, to obtain the reaction product. The vacuum refers to a relative vacuum pressure of -0. 05 MPa to -0.1 MPa.
The following is a description of raw materials employed in examples and comparative examples that will be described later:
Phosphonitrilic chloride trimer was purchased from Shanghai Macklin Biochemical Co., Ltd.

Polylactic acid was purchased from TotalEnergies with the product model L175.

Poly(butylene adipate-co-terephthalate) was purchased from Xinjiang Lanshan Tunhe Technology Co., Ltd. with the product model TH801T.
The following is a description of testing methods employed in examples and comparative examples that will be described later:
The oxygen index was determined by an oxygen index tester in accordance with the method specified in the GB/T2406.1-2008.

The vertical burning performance was determined by a horizontal and vertical burning tester in accordance with the method specified in GB/T2408-2021.

Elongation at break was determined on a universal testing machine in accordance with the method specified in GB/T1040.1-2018, in which the tensile rate was 2.0 mm/min.

### Example 1

A first mixed solution was obtained by blending 0.5 mol of butanediamine and 100 mL of dichloromethane. A second mixed solution was obtained by blending 0.6 mol of triethylamine and 100 mL of dichloromethane. A first reactant was obtained by blending the first mixed solution and the second mixed solution. A second reactant was obtained by dissolving 0.06 mol of phosphonitrilic chloride trimer in 100 mL of dichloromethane.

In a nitrogen atmosphere, the second reactant was added dropwise to the first reactant, and the reaction was allowed to proceed at 0 °C for 48 hr. The substance obtained from the reaction was centrifuged and filtered to give a filter cake. The filter cake was dried in vacuum at 50 °C for 10 hr, giving a reaction product.

Next, 100 parts by weight of polylactic acid, 10 parts by weight of the reaction product, 1 part by weight of cerium oxide, and 0.5 part by weight of epoxy soybean oil were melted at 175 °C at a screw speed of 80 rpm for 7 min to give a melting product. The melting product was granulated, giving a polylactic acid composition.

The properties of the polylactic acid composition are shown in Table 1.

### Example 2

A first mixed solution was obtained by blending 0.5 mol of ethylenediamine and 100 mL of dichloromethane. A second mixed solution was obtained by blending 0.6 mol of triethylamine and 100 mL of dichloromethane. A first reactant was obtained by blending the first mixed solution and the second mixed solution. A second reactant was obtained by dissolving 0.06 mol of phosphonitrilic chloride trimer in 100 mL of dichloromethane.

In a nitrogen atmosphere, the second reactant was added dropwise to the first reactant, and the reaction was allowed to proceed at 0 °C for 48 hr. The substance obtained from the reaction was centrifuged and filtered to give a filter cake. The filter cake was dried in vacuum at 50 °C for 10 hr, giving a reaction product.

Next, 100 parts by weight of polylactic acid, 10 parts by weight of the reaction product, 1 part by weight of cerium oxide, and 0.5 part by weight of epoxy soybean oil were melted at 175 °C at a screw speed of 80 rpm for 7 min to give a melting product. The melting product was granulated, giving a polylactic acid composition.

The properties of the polylactic acid composition are shown in Table 1.

### Example 3

A first mixed solution was obtained by blending 0.5 mol of propylenediamine and 100 mL of dichloromethane. A second mixed solution was obtained by blending 0.6 mol of triethylamine and 100 mL of dichloromethane. A first reactant was obtained by blending the first mixed solution and the second mixed solution. A second reactant was obtained by dissolving 0.06 mol of phosphonitrilic chloride trimer in 100 mL of dichloromethane.

In a nitrogen atmosphere, the second reactant was added dropwise to the first reactant, and the reaction was allowed to proceed at 0 °C for 48 hr. The substance obtained from the reaction was centrifuged and filtered to give a filter cake. The filter cake was dried in vacuum at 50 °C for 10 hr, giving a reaction product.

Next, 100 parts by weight of polylactic acid, 10 parts by weight of the reaction product, 1 part by weight of cerium oxide, and 0.5 part by weight of epoxy soybean oil were melted at 175 °C at a screw speed of 80 rpm for 7 min to give a melting product. The melting product was granulated, giving a polylactic acid composition.

The properties of the polylactic acid composition are shown in Table 1.

### Example 4

A first mixed solution was obtained by blending 0.5 mol of butanediamine and 100 mL of dichloromethane. A second mixed solution was obtained by blending 0.6 mol of triethylamine and 100 mL of dichloromethane. A first reactant was obtained by blending the first mixed solution and the second mixed solution. A second reactant was obtained by dissolving 0.06 mol of phosphonitrilic chloride trimer in 100 mL of dichloromethane.

In a nitrogen atmosphere, the second reactant was added dropwise to the first reactant, and the reaction was allowed to proceed at 0 °C for 48 hr. The substance obtained from the reaction was centrifuged and filtered to give a filter cake. The filter cake was dried in vacuum at 50 °C for 10 hr, giving a reaction product.

Next, 100 parts by weight of polylactic acid, 11 parts by weight of the reaction product, and 0.5 part by weight of epoxy soybean oil were melted at 175 °C at a screw speed of 80 rpm for 7 min to give a melting product. The melting product was granulated, giving a polylactic acid composition.

The properties of the polylactic acid composition are shown in Table 1.

### Comparative Example 1

First, 100 parts by weight of polylactic acid were melted at 175 °C at a screw speed of 80 rpm for 7 min to give a melting product. Then, the melting product was granulated, giving a polylactic acid material.

The properties of the polylactic acid material are shown in Table 1.

**Table 1**

| | Oxygen index (%) | Grade of vertical burning | Elongation at break (%) |
|---|---|---|---|
| Example 1 | 29.7 | V-0 | 54.81 |
| Example 2 | 28.8 | V-0 | 38.76 |
| Example 3 | 29.3 | V-0 | 50.48 |
| Example 4 | 27.5 | V-1 | 40.66 |
| Comparative Example 1 | 18.9 | - | 8.53 |

### Example 5

A first mixed solution was obtained by blending 0.5 mol of butanediamine and 100 mL of dichloromethane. A second mixed solution was obtained by blending 0.6 mol of triethylamine and 100 mL of dichloromethane. A first reactant was obtained by blending the first mixed solution and the second mixed solution. A second reactant was obtained by dissolving 0.06 mol of phosphonitrilic chloride trimer in 100 mL of dichloromethane.

In a nitrogen atmosphere, the second reactant was added dropwise to the first reactant, and the reaction was allowed to proceed at 0 °C for 48 hr. The substance obtained from the reaction was centrifuged and filtered to give a filter cake. The filter cake was dried in vacuum at 50 °C for 10 hr, giving a reaction product.

Next, 70 parts by weight of polylactic acid, 30 parts by weight of poly(butylene adipate-co-terephthalate), 10 parts by weight of the reaction product, 1 part by weight of cerium oxide, and 0.5 part by weight of epoxy soybean oil were melted at 175 °C at a screw speed of 80 rpm for 7 min to give a melting product. The melting product was granulated, giving a polylactic acid composition.

The properties of the polylactic acid composition are shown in Table 2.

### Example 6

A first mixed solution was obtained by blending 0.5 mol of ethylenediamine and 100 mL of dichloromethane. A second mixed solution was obtained by blending 0.6 mol of triethylamine and 100 mL of dichloromethane. A first reactant was obtained by blending the first mixed solution and the second mixed solution. A second reactant was obtained by dissolving 0.06 mol of phosphonitrilic chloride trimer in 100 mL of dichloromethane.

In a nitrogen atmosphere, the second reactant was added dropwise to the first reactant, and the reaction was allowed to proceed at 0 °C for 48 hr. The substance obtained from the reaction was centrifuged and filtered to give a filter cake. The filter cake was dried in vacuum at 50 °C for 10 hr, giving a reaction product.

Next, 70 parts by weight of polylactic acid, 30 parts by weight of poly(butylene adipate-co-terephthalate), 10 parts by weight of the reaction product, 1 part by weight of cerium oxide, and 0.5 part by weight of epoxy soybean oil were melted at 175 °C at a screw speed of 80 rpm for 7 min to give a melting product. The melting product was granulated, giving a polylactic acid composition.

The properties of the polylactic acid composition are shown in Table 2.

### Example 7

A first mixed solution was obtained by blending 0.5 mol of propylenediamine and 100 mL of dichloromethane. A second mixed solution was obtained by blending 0.6 mol of triethylamine and 100 mL of dichloromethane. A first reactant was obtained by blending the first mixed solution and the second mixed solution. A second reactant was obtained by dissolving 0.06 mol of phosphonitrilic chloride trimer in 100 mL of dichloromethane.

In a nitrogen atmosphere, the second reactant was added dropwise to the first reactant, and the reaction was allowed to proceed at 0 °C for 48 hr. The substance obtained from the reaction was centrifuged and filtered to give a filter cake. The filter cake was dried in vacuum at 50 °C for 10 hr, giving a reaction product.

Next, 70 parts by weight of polylactic acid, 30 parts by weight of poly(butylene adipate-co-terephthalate), 10 parts by weight of the reaction product, 1 part by weight of cerium oxide, and 0.5 part by weight of epoxy soybean oil were melted at 175 °C at a screw speed of 80 rpm for 7 min to give a melting product. The melting product was granulated, giving a polylactic acid composition.

The properties of the polylactic acid composition are shown in Table 2.

### Example 8

A first mixed solution was obtained by blending 0.5 mol of butanediamine and 100 mL of dichloromethane. A second mixed solution was obtained by blending 0.6 mol of triethylamine and 100 mL of dichloromethane. A first reactant was obtained by blending the first mixed solution and the second mixed solution. A second reactant was obtained by dissolving 0.06 mol of phosphonitrilic chloride trimer in 100 mL of dichloromethane.

In a nitrogen atmosphere, the second reactant was added dropwise to the first reactant, and the reaction was allowed to proceed at 0 °C for 48 hr. The substance obtained from the reaction was centrifuged and filtered to give a filter cake. The filter cake was dried in vacuum at 50 °C for 10 hr, giving a reaction product.

Next, 70 parts by weight of polylactic acid, 30 parts by weight of poly(butylene adipate-co-terephthalate), 11 parts by weight of the reaction product, and 0.5 part by weight of epoxy soybean oil were melted at 175 °C at a screw speed of 80 rpm for 7 min to give a melting product. The melting product was granulated, giving a polylactic acid composition.

The properties of the polylactic acid composition are shown in Table 2.

### Comparative Example 2

First, 70 parts by weight of polylactic acid and 30 parts by weight of poly(butylene adipate-co-terephthalate) were melted at 175 °C at a screw speed of 80 rpm for 7 min to give a melting product. Then, the melting product was granulated, giving a composite polylactic acid material.

The properties of the composite polylactic acid material are shown in Table 2.

**Table 2**

| | Oxygen index (%) | Grade of vertical burning | Elongation at break (%) |
|---|---|---|---|
| Example 5 | 28.6 | V-0 | 90.5 |
| Example 6 | 28.1 | V-0 | 88.7 |
| Example 7 | 28.3 | V-0 | 91.2 |
| Example 8 | 27.3 | V-1 | 93.3 |
| Comparative Example 2 | 18.3 | - | 100.5 |

The present disclosure is not limited to the embodiments described above. Any variation, improvement, and replacement which do not depart from the essence of the present disclosure and which those skilled in the art are able to think of fall within the scope of the present disclosure.

## Claims

1. A polylactic acid composition, comprising a polymeric material and a reaction product obtained by reacting a compound represented by formula (A) with a compound represented by formula (B), wherein the polymeric material comprises polylactic acid, 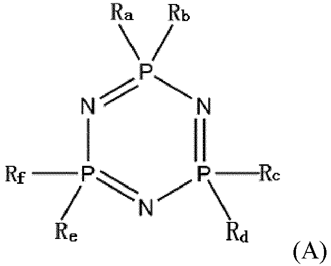 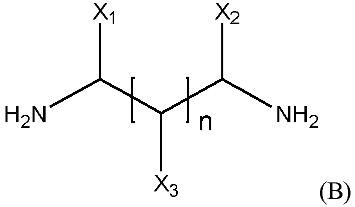
wherein Rₐ to Rf are each independently selected from the group consisting of H, a C1 to C10 alkyl group, and a halogen atom;
X₁ to X₃ are each independently selected from the group consisting of H and a C1 to C3 alkyl group, and n is an integer of 0 to 10.

2. The polylactic acid composition according to claim 1, wherein the molar ratio of the compound represented by formula (A) to the compound represented by formula (B) is 6: (25-80).

3. The polylactic acid composition according to claim 1, wherein n is an integer of 0 to 7, and X₁ to X₃ are each independently selected from H.

4. The polylactic acid composition according to claim 1, comprising 1-30 parts by weight of the reaction product based on 100 parts by weight of the polymeric material.

5. The polylactic acid composition according to claim 1, wherein the polymeric material comprises the polylactic acid in an amount greater than or equal to 40 wt%.

6. The polylactic acid composition according to claim 1, wherein the polymeric material further comprises one or more selected from the group consisting of polyethylene, polypropylene, polyvinyl chloride, a polyester-based substance, and an epoxy resin.

7. The polylactic acid composition according to claim 1, further comprising a rare earth oxide in an amount of 0.3-2 parts by weight based on 100 parts by weight of the polymeric material,
wherein the rare earth oxide is one or more selected from the group consisting of lanthanum oxide, cerium oxide, and yttrium oxide.

8. A method of preparing the polylactic acid composition according to claim 1, comprising:
a step of melting a raw material comprising a polymeric material and a reaction product to obtain a polylactic acid composition.

9. The method according to claim 8, further comprising:
a step of reacting a compound represented by formula (A) with a compound represented by formula (B) in the presence of a solvent and an acid-binding agent to obtain the reaction product,
wherein the solvent is one or more selected from the group consisting of chloromethane, dichloromethane, trichloromethane, tetrachloromethane, chloroethane, dichloroethane, trichloroethane, tetrachloroethane, chloropropane, dichloropropane, trichloropropane, tetrachloropropane, ethyl acetate, dimethyl sulfoxide, and acetone;
the acid-binding agent is one or more selected from the group consisting of a tertiary amine-based compound, pyridine, and tetraethylene pentamine;
the molar ratio of the compound represented by formula (A) to the acid-binding agent is 6: (30-90); and
the step of reacting proceeds at a temperature of -10-10 °C for a period of 24-80 hr.

10. The method according to claim 8, wherein the step of melting is carried out at a temperature of 165-195 °C under stirring at a screw speed of 30-120 rpm.
